(19) Europäisches Patentamt
European Patent Office
Office européen des brevets

(11) **EP 2 586 548 B1**

(12) **EUROPEAN PATENT SPECIFICATION**

(45) Date of publication and mention
of the grant of the patent:
**14.08.2019 Bulletin 2019/33**

(51) Int Cl.:
***B22F 3/105*** *(2006.01)*   ***C22F 1/10*** *(2006.01)*

(21) Application number: **12190011.2**

(22) Date of filing: **25.10.2012**

(54) **Component or coupon for being used under high thermal and stress load and method for manufacturing such component or coupon**

Komponente oder Coupon zur Verwendung unter hoher Wärme- und Beanspruchungslast und Verfahren zur Herstellung solch einer Komponente oder Coupon

Composant ou coupon destiné à être utilisé sous fortes contraintes et chaleurs et procédé de fabrication dudit composant ou coupon

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2011 CH 17552011**

(43) Date of publication of application:
**01.05.2013 Bulletin 2013/18**

(73) Proprietor: **Ansaldo Energia IP UK Limited London W1G 9DQ (GB)**

(72) Inventors:
• **Szwedowicz, Jaroslaw Leszek**
  **5330 Bad Zurzach (CH)**
• **Rickenbacher, Lukas Emanuel**
  **4053 Basel (CH)**

(74) Representative: **Bernotti, Andrea et al Studio Torta S.p.A.
Via Viotti, 9
10121 Torino (IT)**

(56) References cited:
**US-A1- 2010 252 151**

• F TORSTER ET AL: "Influence of grain size and heat treatment on the microstructure and mechanical properties of the nickel-base superalloy U 720 LI", MATERIALS SCIENCE AND ENGINEERING A, vol. 234-236, 30 August 1997 (1997-08-30), pages 189-192, XP055013013, ISSN: 0921-5093, DOI: 10.1016/S0921-5093(97)00161-5

• ALEXANDRE F ET AL: "Modelling the optimum grain size on the low cycle fatigue life of a Ni based superalloy in the presence of two possible crack initiation sites", SCRIPTA MATERIALIA, ELSEVIER, AMSTERDAM, NL, vol. 50, no. 1, 1 January 2004 (2004-01-01), pages 25-30, XP004463790, ISSN: 1359-6462, DOI: 10.1016/J.SCRIPTAMAT.2003.09.043

• SEO ET AL: "Grain structure prediction of Ni-base superalloy castings using the cellular automaton-finite element method", MATERIALS SCIENCE AND ENGINEERING A: STRUCTURAL MATERIALS:PROPERTIES, MICROSTRUCTURE & PROCESSING, LAUSANNE, CH, vol. 449-451, 19 March 2007 (2007-03-19), pages 713-716, XP005914720, ISSN: 0921-5093, DOI: 10.1016/J.MSEA.2006.02.400

• SANTOS E C ET AL: "Rapid manufacturing of metal components by laser forming", INTERNATIONAL JOURNAL OF MACHINE TOOLS AND MANUFACTURE, ELSEVIER, US, vol. 46, no. 12-13, 1 October 2006 (2006-10-01), pages 1459-1468, XP024902437, ISSN: 0890-6955, DOI: 10.1016/J.IJMACHTOOLS.2005.09.005 [retrieved on 2006-10-01]

• KAMRAN AAMIR MUMTAZ ET AL: "Laser melting functionally graded composition of Waspaloy(R) and Zirconia powders", JOURNAL OF MATERIALS SCIENCE, KLUWER ACADEMIC PUBLISHERS, BO, vol. 42, no. 18, 3 June 2007 (2007-06-03), pages 7647-7656, XP019528803, ISSN: 1573-4803, DOI: 10.1007/S10853-007-1661-3

**(Cont. next page)**

EP 2 586 548 B1

- LI J ET AL: "Microstructure and mechanical properties of rapid directionally solidified Ni-base superalloy Rene'41 by laser melting deposition manufacturing", MATERIALS SCIENCE AND ENGINEERING A: STRUCTURAL MATERIALS: PROPERTIES, MICROSTRUCTURES AND PROCESSING, vol. 527, no. 18, 2010, - 2010, pages 4823-4829, XP029181364, ISSN: 0921-5093, DOI: 10.1016/J.MSEA.2010.04.062

**Description**

BACKGROUND OF THE INVENTION

The present invention relates to the manufacturing of components or coupons (i.e. a part of a component, preferably used for repairing the component), especially for gas turbines, which are used under extreme thermal and mechanical conditions.

PRIOR ART

Components of gas turbines or other thermal machines, e.g. rotating blades or the like, are subject to severe operating conditions. In general, grain size has an impact on the lifetime of a component made of metal and/or ceramic alloys.

Depending on the operating temperatures or stresses, the component can suffer from various failure mechanisms that are described as Low-Cycle Fatigue (LCF), Thermo-Mechanical Fatigue (TMF), Creep, Oxidation, as well as High-Cycle Fatigue (HCF) damages. In terms of the operation condition, the designed system can be loaded by one or more damage mechanisms, as they are mentioned above. However, other damage mechanisms may also be taken into account.

In accordance with common criteria for the best lifetime arrangement, small or big grain sizes of the applied alloy are convenient for minimizing damage rate of LCF or creep mechanism, respectively. Since the temperature and stress distribution within the mechanical component are non-uniform, like for instance in a gas turbine blade, some more specific rules for grain size in terms of a local component loading seems to be more adequate than these common well-known criteria.

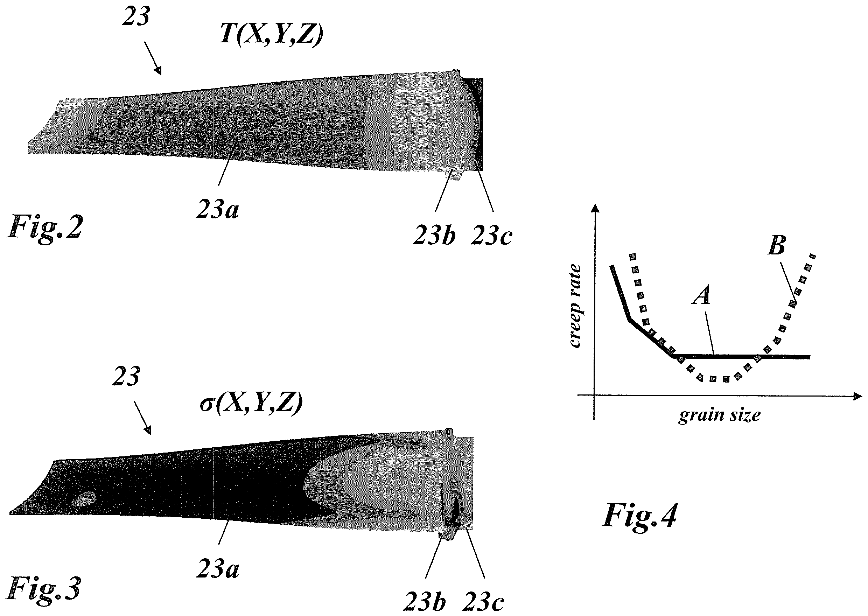

Frequently, different parts of the same component can suffer either from LCF or from creep, and then more specific criteria of the grain size dependence of minimum LCF or creep rate are expected. Concerning only the creep mechanism, the creep rate can perform with respect to grain size in different manners as it is schematically illustrated in Fig. 4.

For higher temperatures above $0.5T_m$ (where $T_m$ denotes the absolute melting temperature of the alloy) and intermediate stress magnitudes $\sigma$, the creep rate decreases up to the specific value, which then remains constant independent on increasing grain size (see a solid curve A in Fig. 4). For this behavior, a dislocation climb mechanism dominates the creep deformation.

In the range of intermediate temperature varying between 0.4 and $0.5T_m$, and higher stresses, the creep rate shows a minimum value at a particular grain size of the alloy (see the dotted curve B in Fig. 4). For constant temperature and stress, the creep rate increases for higher grain sizes of the alloy. This damage mechanism can be explained by the Hall-Petch rule, which describes plastic flow for various grain sizes.

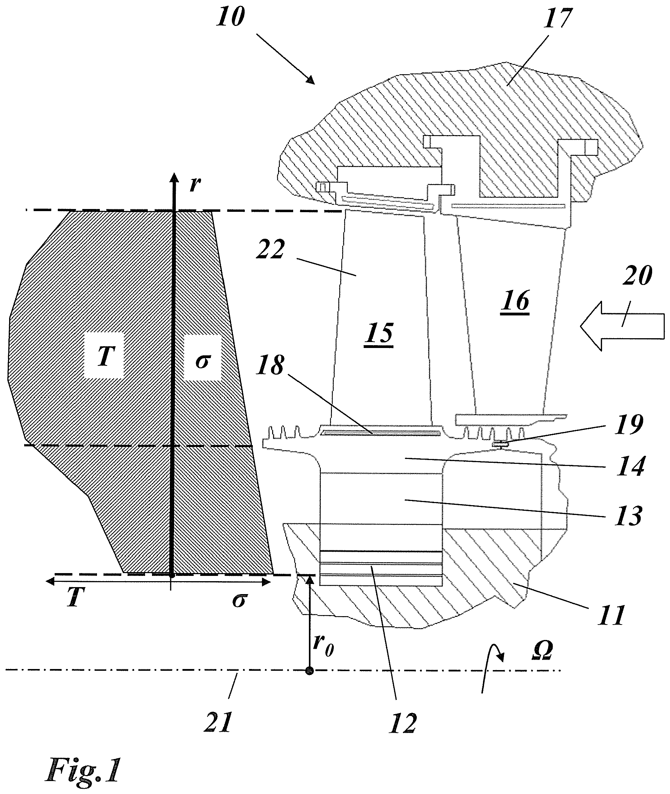

These considerations apply to the situation in a gas turbine. Fig. 1 schematically illustrates the one-dimensional (1D) radial distribution of temperature T and stress $\sigma$ acting on a gas turbine blade rotating at the rotational speed $\Omega$ under the nominal operation conditions. In the gas turbine 10 of Fig. 1, 11 denotes a rotor rotating around a machine axis 21 with rotational speed $\Omega$. A rotating blade 15 is mounted on the rotor 11 with a root 12. The blade 15 further comprises a shank 13, a platform 14 and an airfoil 22. Upstream of the blade 15 with respect to the hot gas flow 20, a (stationary) vane 16 is shown. The rotor 11 is surrounded by a stationary casing 17. 18 and 19 are circumferential and axial sealing systems, respectively, preventing from leakage of hot gas into the cooled lower part of the blade 15.

The gas turbine blade 15, which is schematically shown in Fig. 1, is an example of a mechanical component whose lifetime depends on the evaluated temperature, which generates non-uniform thermal stress distribution within the component. The rotating turbine blade 15 is additionally loaded by the centrifugal stresses that depend on radius r and rotational speed $\Omega$ (see left part of Fig. 1). The 1-dimensional centrifugal stresses $\sigma$ achieve their maximum in root 12, which attaches blade 15 to the rotor 11.

The performance of a gas turbine engine increases with higher firing temperature in the combustor, and therefore vane 16 and blade 15 operate in the range of high temperatures close to $T_m$. To protect the blades and vanes from oxidation damage, they are covered by a thermal barrier coating (TBC) and in addition cooled internally by a coolant, such as either air provided from the compressor, or steam injected from other systems, like a steam turbine (in a combined-cycle environment). The coolant is redistributed under platform 14 of blade 15 to reduce the temperature of the shank section 13 and root part 12, where the stresses reach their maximum values due to the centrifugal loading (see Fig. 1).

The complex geometries of blade 15 and vane 16 match with requirements of the aerodynamic and mechanical integrity. Therefore, many geometrical notches are present within the blade and vane, thus inducing local stress concentrations.

The stresses $\sigma$ and temperatures T acting on the blade 15 under the nominal boundary condition can be computed with a numerical approach, like e.g. the Finite Element Method (FEM), Boundary Element Method (BEM), and others. In addition, the temperatures and stresses are frequently measured in a prototyping process of the engine, and those experimental results are used for validation of the numerical values.

A metallurgical investigation of a component, which has been in service, provides an empirical assessment of the real temperatures in the system, which is also considered in the validation of the numerical model and its thermal boundary conditions. These three approaches or at least one of them can be used for creating a detailed map of the temperature and stress distribution within the whole component for the assessment of its lifetime.

Based on the described variation of the temperature T and mechanical stress $\sigma$ (or/and strain $\varepsilon$) magnitudes within blade 15, which may lead either to LCF or creep damages, a controlled variation of optimal grain sizes of the alloy is a beneficial parameter for maximizing lifetime capability of the component made of the same alloy or different alloys.

Document US 5,649,280 A describes a method of high retained strain forging for Ni-base superalloys, particularly those which comprise a mixture of gamma and gamma prime phases, and most particularly those which contain at least about 30 percent by volume of gamma prime. The method utilizes an extended subsolvus anneal to recrystallize essentially all of the superalloy and form a uniform, free grain size. Such alloys may also be given a supersolvus anneal to coarsen the grain size and redistribute the gamma prime. The method permits the manufacture of forged articles having a fine grain size in the range of about ASTM 5-12.

Document US 5,759,305 A discloses a method of making Ni-base superalloy articles having a controlled grain size from a forging preform, comprising the steps of: providing a Ni-base superalloy preform having a recrystallization temperature, a gamma prime solvus temperature and a microstructure comprising a mixture of gamma and gamma prime phases, wherein the gamma prime phase occupies at least 30% by volume of the Ni-base superalloy; hot die forging the superalloy preform at a temperature of at least about 1600°F., but below the gamma prime solvus temperature and a strain rate from about 0.03 to about 10 per second to form a hot die forged superalloy work piece; isothermally forging the hot die forged superalloy work piece to form the finished article; supersolvus heat treating the finished article to produce a substantially uniform grain microstructure of about ASTM 6-8; cooling the article from the supersolvus heat treatment temperature.

Document US 7,763,129 B2 teaches a method of forming a component from a gamma-prime precipitation-strengthened nickel-base superalloy so that, following a supersolvus heat treatment the component is characterized by a uniformly-sized grain microstructure. The method includes forming a billet having a sufficiently fine grain size to achieve superplasticity of the superalloy during a subsequent working step. The billet is then worked at a temperature below the gamma-prime solvus temperature of the superalloy so as to form a worked article, wherein the billet is worked so as to maintain strain rates above a lower strain rate limit to control average grain size and below an upper strain rate limit to avoid critical grain growth. Thereafter, the worked article is heat treated at a temperature above the gamma-prime solvus temperature of the superalloy for a duration sufficient to uniformly coarsen the grains of the worked article, after which the worked article is cooled at a rate sufficient to reprecipitate gamma-prime within the worked article.

LI J. et al. "Microstructure and mechanical properties of rapid directionally solidified Ni-base superalloy Rene'41 by laser melting deposition manufacturing", Materials Science and Engineering A: Structural Materials: Properties, Microstructure and Processing, Vol. 527, No. 18, pages 4823-4829 discloses a Ni-base superalloy produced by laser melting deposition (LMD) manufacturing process. The process is controlled so as to obtain a desired lifetime-maximizing grain size distribution, resulting in a material exhibiting excellent high-temperature mechanical properties.

Although these documents teach various methods for achieving a certain optimized grain size within a gas turbine component, or the like, there is no intend to establish, or knowledge about the advantages of, a specified local variation of the grain size within the component in accordance with the locally varying thermal and mechanical loads on that component.

SUMMARY OF THE INVENTION

It is an object of the present invention to provide a method for manufacturing a component or coupon which is optimized in its internal structure with respect to the locally different thermal and mechanical loads.

This object is obtained by a method for manufacturing a component or coupon according to claim 1.

The component/coupon manufactured by the method of the invention is made of an alloy material with a controllable grain size, and is in service subjected to an expected temperature and/or stress and/or strain distribution, which varies with the geometrical coordinates of the component/coupon, and has a grain size distribution, which depends on said expected temperature and/or stress and/or strain distribution such that the lifetime of the component is improved with respect to a similar component with a substantially uniform grain size.

The inventive method according to the invention for manufacturing such a component or coupon comprises the steps of:

a) generating 1 D or 2D or 3D parameter distribution data of one or more grain-size-relevant and lifetime-determining parameters for said component/coupon being under operating conditions, said distribution data comprising a temperature distribution and a stress distribution or/and a strain distribution; said temperature and stress or/and strain distribution being computed with respect to the service conditions for maximizing the lifetime of the component/coupon;

b) deriving an optimal grain size distribution from said temperature and stress and/or strain distribution such that the lifetime of the component is improved with respect to a similar component with a substantially uniform grain size;

c) manufacturing said component/coupon by an additive manufacturing process, especially selective laser melting (SLM);

d) controlling during manufacturing of said component or coupon the grain size distribution within said component or coupon in order to maximize the lifetime of said component, wherein the desired lifetime-maximizing grain size distribution is directly generated during said additive manufacturing process.

Grain-size-relevant means that the effect of these parameters on the component can be controlled by grain size.

According to an embodiment of the inventive method 3D parameter distribution data comprising a computed 3D temperature distribution and von Mises stress distribution are generated by a calculation, especially with a Finite Element Method (FEM).

Preferably, the additive manufacturing method includes selective laser melting (SLM) of a suitable powder with a first laser beam, whereby the grain size is controlled by controlling the cooling rate of the melt pool within the SLM process.

Especially, the cooling rate of the melt pool within the SLM process is controlled by controlling the local thermal gradients at the melting zone.

Especially, the local thermal gradients at the melting zone are controlled by a second laser beam and/or a radiant heater.

According to another embodiment a substrate plate for the SLM process is used, which is heated or cooled by a heating or cooling medium to lower or increase said thermal gradients.

BRIEF DESCRIPTION OF THE DRAWINGS

The present invention is now to be explained more closely by means of different embodiments and with reference to the attached drawings.

Fig. 1     schematically illustrated the one-dimensional (1D) radial distribution of temperature T and stress $\sigma$ acting on a gas turbine blade rotating at the rotational speed $\Omega$ under the nominal operation conditions;

Fig. 2     shows a computed 3D temperature (T) distribution in a gas turbine blade in the Cartesian reference system (X,Y,Z), where different grey scales correspond to different temperature values;

Fig. 3     shows a computed 3D von-Mises stress ($\sigma$) distribution in a gas turbine blade in the Cartesian reference system (X,Y,Z), where different grey scales correspond to different stress values;

Fig. 4     shows two types of creep rate in terms of grain size, where each of the curves A, B represents the creep behavior for a constant temperature T and stress $\sigma$;

Fig. 5     shows an illustration of the process according to the invention based on the data from the 3D numerical results of temperature T(X,Y,Z), strain $\varepsilon$(X,Y,Z), stress $\sigma$(X,Y,Z) or/and other parameter distributions for producing of a component made of an alloy with controlled grain size d(X,Y,Z) within the alloy for obtaining optimized material properties under the operation condition of interest;

Fig. 6     shows a scheme of a suitable process apparatus for an SLM manufacturing process for the component (turbine blade) to be manufactured;

Fig. 7     shows a scheme of a suitable process apparatus with additional heating and/or cooling means for processing the component (turbine blade) to be manufactured; and

Fig. 8     shows a scheme of a suitable process apparatus, where the grain size distribution is generated by a local heat treatment of the manufactured component (turbine blade).

DETAILED DESCRIPTION OF DIFFERENT EMBODIMENTS OF THE INVENTION

The present invention is based on the phenomenon of the grain size having an impact on the lifetime of the component operating at elevated temperatures. An additive manufacturing process (selective laser sintering or melting (SLS or SLM), electron beam melting (EBM), 3D printing or other additive manufacturing processes) of the entire component or only its repair coupon is controlled in terms of the three-dimensional temperature T, strain $\varepsilon$ or/and stress $\sigma$ distribution obtained from numerical, experimental, or/and empirical approaches. In the numerical or/and lifetime model of the component, the stress field is described with a vector of 6 stress components such as:

$\sigma_{xx}$     the normal stress in the X-direction of the Cartesian reference system,
$\sigma_{yy}$     the normal stress in the Y-direction of the Cartesian reference system,
$\sigma_{zz}$     the normal stress in the Z-direction of the Cartesian reference system,
$\sigma_{xy}$     the shear stress on the XY-plane of the Cartesian reference system,
$\sigma_{yz}$     the shear stress on the YZ-plane of the Cartesian reference system, and
$\sigma_{zx}$     the shear stress on the ZX-plane of the Cartesian reference system.

Also, the strain state is defined in the same manner like the stress by using 3 normal $\varepsilon_{xx}$, $\varepsilon_{yy}$, $\varepsilon_{zz}$, and 3 shear $\varepsilon_{xy}$, $\varepsilon_{yz}$, $\varepsilon_{zx}$ strain components referred in the Cartesian reference system. By using the matrix notation, the relation between the stress and strain at every point of the component is determined for the three-dimensional stress field based on Hooke's law by

$$(1) \quad \{\sigma\} = [C]\,\{\varepsilon\} \quad ,$$

where $\{\sigma\}$ and $\{\varepsilon\}$ are vectors of the six stress and strain components, whereby [C] denotes a (6 x 6) matrix, called the elastic stiffness, which in the general case of anisotropic materials, contains 36 elastic constants $C_{i,j}$, where i = 1, 2, ..., 6, and j = 1, 2, ..., 6. In case of an isotropic material, the matrix [C] is determined with Poisson's ratio v and Young modulus E(T), which depends on the metal temperature T.

In general, the stress and strain components depend on displacements (deformations) of an arbitrary point of the deformed part. These deformations are driven by the thermal expansion and/or mechanical loadings that can act as a static or dynamic pressure and/or forces on the component. The deformations of an arbitrary point are defined with the displacement vector $\{q\} = \mathrm{col}\{\,q_x, q_y, q_z\}$, determining displacements of this point in the Cartesian reference system along the X, Y, and Z axis, respectively. The relation of the strain to the deformation at an arbitrary point (X,Y,Z) of the part is defined by:

$$(2) \quad \varepsilon_{xx} = \partial q_x / \partial X,$$

$$(3) \quad \varepsilon_{yy} = \partial q_y / \partial Y,$$

$$(4) \quad \varepsilon_{zz} = \partial q_z / \partial Z,$$

$$(5) \quad \varepsilon_{xy} = (\,\partial q_x / \partial Y + \partial q_y / \partial X\,)/2,$$

$$(6) \quad \varepsilon_{yz} = (\,\partial q_y / \partial Z + \partial q_z / \partial Y\,)/2,$$

$$(7) \quad \varepsilon_{zx} = (\,\partial q_z / \partial X + \partial q_x / \partial Z\,)/2.$$

In the design process, the stress $\{\sigma\}$, strain $\{\varepsilon\}$, displacement $\{q\}$ and temperature T of an arbitrary point are computed with an engineering software based on the Finite Element Methods, Boundary Element Methods, and others. A typical example of these analyses is shown in Fig. 2 and 3 for the three-dimensional temperature (Fig. 2) and stress (Fig. 3) distribution of a gas turbine blade defined in the Cartesian reference system.

With respect to the temperature and stress distribution, these tools exactly predict the lifetime of the part using the failure mechanisms of creep, Low Cycle Fatigue, High Cycle Fatigue, Fracture Mechanic, Relaxation, and others. In order to include the grain size d of the polycrystalline materials, the general creep equation can be expressed by

$$(8) \qquad d\varepsilon_c/dt = (C\ \sigma^m\ \exp(-Q/kT)\ )/d^b \qquad ,$$

where $\varepsilon_c$ denotes the creep strain, C means is a material constant of the specific creep mechanism, m and b are exponents dependent on the creep mechanism, Q corresponds to the activation energy of the creep mechanism, T is the absolute temperature at point (X,Y,Z), $\sigma$ is the stress acting on the point (X,Y,Z) of interest, d is the size of the grain of the material, and k is Boltzmann's constant. In the literature, different models of the creep being dependent on the grain size are given are well-known.

Regarding the grain size d, the yield stress $\sigma_p$ can be defined for instance by

$$(9) \qquad \sigma_p = G\ b\ (\rho)^{1/2} + K/(d)^{1/2} \qquad ,$$

where G is the shear modulus $G(T) = E(T)/[2(1+v)]$ dependent on temperature T, b denotes Burger's vector, K means Hall-Petch coefficient, and $\rho$ is the dislocation density.

By using the equations (8)-(9), or similar equations given in the literature or obtained from an internal investigation, a trend of the strain behaviors in terms of grain size d can be calculated with respect to the arbitrary position (X,Y,Z) of the part. For the component of interest, whose stress and temperature fields are computed with respect to the service conditions for maximizing the lifetime, the required grain size d is transferred to the manufacturing machine or processing apparatus, which produces the component with the locally controlled grain sizes d(X,Y,Z) dependent on the temperature T(X,Y,Z), stress $\sigma$(X,Y,Z) or/and strain $\varepsilon$(X,Y,Z) or other parameter based on the lifetime model.

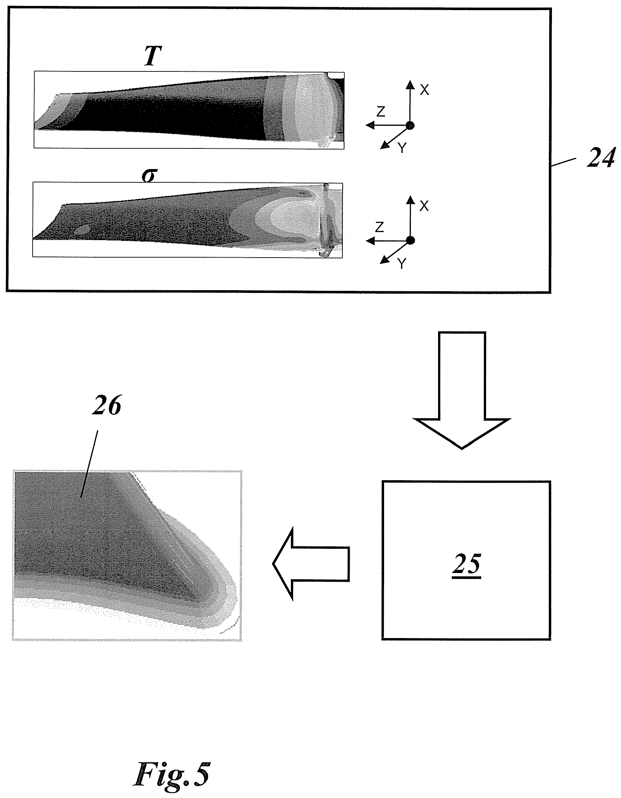

This process is illustrated in Fig. 5, where different technologies of additive manufacturing can be used. The process according to Fig. 5 is an additive manufacturing process or customized local heat treatment process based on 3D parameter distribution data 24 from the 3D finite element temperature T and stress $\sigma$ results of the shrouded gas turbine blade under the nominal service condition.

The numerical model of temperature T(X,Y,Z), strain $\varepsilon$(X,Y,Z), stress $\sigma$(X,Y,Z) and other parameters is used for determining the demanded grain size d(X,Y,Z) resulting in the maximum lifetime of the part with respect to the desired operation conditions. The 3D parameter distribution data 24 are transferred to a processing apparatus 25, which processes the desired component 26.

In a preferred embodiment of this invention and representative for any potential additive manufacturing process, selective laser melting (SLM) is used to produce the mechanical component. Selective laser melting (SLM) is an additive manufacturing technology used to directly produce metallic parts from powder materials. As described for example in document US 6,215,093 B1, thin powder layers with a thickness of typically between $20\mu$m to $60\mu$m are generated on a metallic base plate or the already produced fraction of an object, respectively. The cross-sections of a sliced CAD model stored in the SLM machine are scanned subsequently using a high power laser beam to compact the powder material. In general the STL-format is used to transfer the model geometry to the SLM machine.

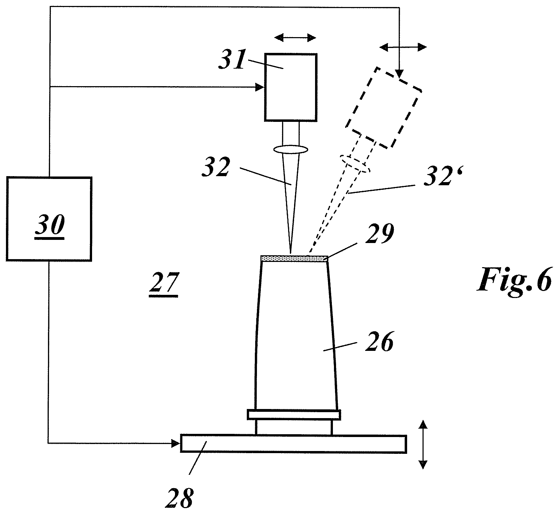

Fig. 6 shows a schematic diagram of a respective processing apparatus using SLM. The processing apparatus 27 of Fig. 6 comprises a displaceable substrate plate 28 for the processed and non-processed powder layers 29, which successively build up the component 26. A scanning focused laser beam 32 is generated by a laser source 31. Movement and power of the laser source 31 or laser beam 32 and movement of the substrate plate 28 are controlled by a control unit 30.

In the present invention the STL file mentioned above will be replaced accordingly by a CAD file including not only the geometrical information but also the temperature T(X,Y,Z), stress $\sigma$(X,Y,Z) or/and strain $\varepsilon$(X,Y,Z) or other parameter distribution based on the lifetime model. The optimal grain size distribution can then be derived from the above-mentioned information and equations. The optimal grain size d(X,Y,Z) can either be already included in the mentioned CAD file or can be calculated on the SLM machine (27) during processing.

To achieve the desired grain size d(X,Y,Z), the process parameters of the manufacturing process have to be adapted accordingly. This can be done for the whole layer or selectively. In general, the grain size correlates to the cooling rate of the melt pool within the SLM process: the higher the thermal gradient the smaller the resulting grain size, and vice versa. Therefore, the precise local adaption of the process parameters, such as but not limited to, laser power, laser mode (continuous wave or pulsed), laser focus diameter, scan speed and scan strategy is crucial to achieve the desired thermal gradient and grain sizes, respectively.

Further process equipment or processing apparatus can be used to better adjust local thermal gradients. In a preferred embodiment of this invention, a second laser beam 32' (Fig. 6) is used to heat up surrounding material and therefore selectively lowering the local thermal gradients to achieve the desired grain sizes.

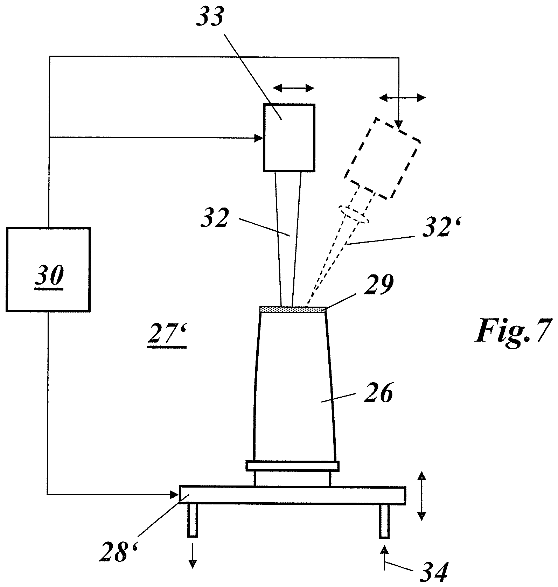

In another embodiment of this invention (Fig. 7) a radiant heater 33 can be used in the processing apparatus 27' instead or in combination with the second laser beam 32' to adjust the temperature distribution within the powder layer 29 or even within the whole process chamber. An example of such a radiant heater 33 is described in document EP 1 762 122 B2. Additionally, a substrate plate 28' heated or cooled by a heating or cooling medium 34 (Fig. 7) can be used to lower or increase thermal gradients. An embodiment of such a heated substrate plate is described in document DE 101 04 732 C1. However, one skilled in the art may find other beneficial equipment helping to locally adjust thermal gradients, which are included herein as well.

By using the described method and means a component or its part can be produced with locally optimized grain sizes in respect to the local 6 normal and shear stresses $\{\sigma(X,Y,Z)\}$ or strains $\{\varepsilon(X,Y,Z)\}$ obtained from the 1D, 2D, or 3D numerical simulations. Therefore, these components have superior lifetime compared to conventionally manufactured components.

The description of the stress and/or strain field of the component/part can be simplified by other approaches. For instance, the stress and strain distribution can be represented by the average normal and shear stress or/and strain instead of digitalized stress $\sigma(X,Y,Z)$ state of the component/part. In this case, the stress, temperature, strain and other parameters vary with respect to the one direction of the reference system like it is shown in Fig. 1, where stress $\sigma$ and temperature T vary in terms of the radial coordinate r. Also, different modeling methods of the stress/strain at the arbitrary point (X,Y,Z) can be used, for instance the principle stress/strain definition or others.

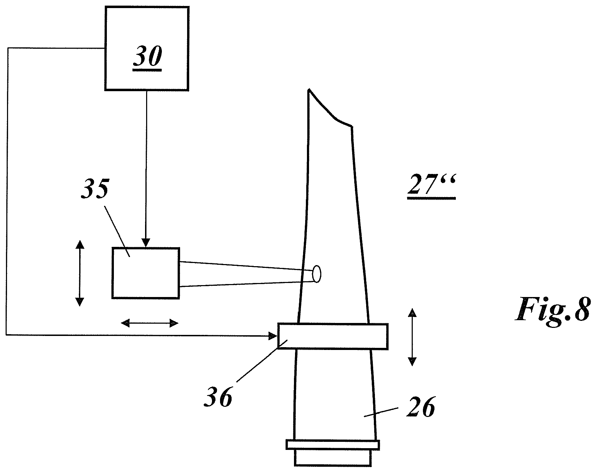

If the component or its repair coupon is produced with a homogenous microstructure of the alloy for a constant grain size, a customized and locally varying heat treatment can be applied according to Fig. 8. The component/part 26 is heat-treated in a processing apparatus 27" with respect to a customized variation of grain sizes using the numerical, experimental or empirical results of temperature T and stress $\sigma$ (or strain $\varepsilon$). A focal pointing heat generator 35 or/and a cooling system 36 could be considered as example of a device for generation of variable grain sizes within the produced component/part depending on the known temperature T and mechanical stress $\sigma$ (or strain $\varepsilon$).

A suitable and exemplary alloy for a component or coupon (repair part of the component) according to the invention may be IN738LC. Other Ni base superalloys or superalloys on a different basis are also suitable.

The process of the additive manufacturing produces the object for the controlled local optimal grain sizes with respect to the expected loading. Arbitrary approaches, such as: different sizes of the metal powder applied to the process, adjusting laser power, and others may be taken in consideration, but are not presented here in detail for each process.

LIST OF REFERENCE NUMERALS

| | |
|---|---|
| 10 | gas turbine |
| 11 | rotor |
| 12 | root |
| 13 | shank |
| 14 | platform |
| 15 | blade |
| 16 | vane |
| 17 | casing |
| 18,19 | sealing system |
| 20 | hot gas flow |
| 21 | machine axis |
| 22 | airfoil |
| 23 | blade |
| 23a | airfoil |
| 23b | platform |
| 23c | root |
| 24 | 3D parameter distribution data |
| 25,27,27',27" | processing apparatus |
| 26 | component (part, coupon) |
| 28 | substrate plate (displaceable) |
| 29 | powder layer |
| 30 | control unit |
| 31 | laser source |

| 32,32' | laser beam (focused) |
|---|---|
| 33 | radiant heater |
| 34 | cooling/heating medium |
| 35 | focal pointing heat generator |
| 36 | cooling system |
| A,B | curve |
| $r,r_0$ | radius |
| T | temperature |
| $\sigma$ | stress |
| $\Omega$ | rotational speed |

**Claims**

1. Method for manufacturing a component or coupon (26), which component or coupon (26) is used in a thermal machine under extreme thermal and mechanical conditions, whereby said component or coupon (26) is made of a superalloy material with a controllable grain size (d), and is in service subjected to an expected temperature and/or stress and/or strain distribution (T(X,Y,Z); $\sigma$(X,Y,Z); $\varepsilon$(X,Y,Z)), which varies with the geometrical coordinates (X,Y,Z) of the component or coupon (26),
said method comprising the steps of

    a) generating 1 D or 2D or 3D parameter distribution data (24) of one or more grain-size-relevant and lifetime-determining parameters (T, $\sigma$, $\varepsilon$ etc.) for said component/coupon being under operating conditions, said distribution data (24) comprising a temperature distribution (T(X,Y,Z)) and a stress ($\sigma$(X,Y,Z)) distribution or/and a strain ($\varepsilon$(X,Y,Z)) distribution; said temperature and stress or/and strain distribution being computed with respect to the service conditions for maximizing the lifetime of the component/coupon;
    b) deriving an optimal grain size distribution (d(X,Y,Z)) from said temperature (T(X,Y,Z)) and stress and/or strain distribution ($\sigma$(X,Y,Z); $\varepsilon$(X,Y,Z)) such that the lifetime of the component (26) is improved with respect to a similar component with a substantially uniform grain size;
    c) manufacturing said component/coupon (26) by an additive manufacturing process, especially selective laser melting (SLM);
    d) controlling during manufacturing of said component/coupon (26) the grain size distribution (d(X,Y,Z)) within said component/coupon (26) in order to maximize the lifetime of said component/coupon (26), wherein the desired lifetime-maximizing grain size distribution (d(X,Y,Z)) is directly generated during said additive manufacturing process.

2. Method according to claim 1, **characterized in that** 3D parameter distribution data (24) comprising a computed 3D temperature distribution T(X,Y,Z) and von Mises stress distribution $\sigma$(X,Y,Z) are generated by a calculation, especially with a Finite Elements Method (FEM).

3. Method according to claim 1 or 2, **characterized in that** said additive manufacturing method includes selective laser melting (SLM) of a suitable powder with a first laser beam (32), and that the grain size (d) is controlled by controlling the cooling rate of the melt pool within the SLM process.

4. Method according to claim 3, **characterized in that** the cooling rate of the melt pool within the SLM process is controlled by controlling the local thermal gradients at the melting zone.

5. Method according to claim 4, **characterized in that** the local thermal gradients at the melting zone are controlled by a second laser beam (32') and/or a radiant heater (33).

6. Method according to claim 4 or 5, **characterized in that** a substrate plate (28') for the SLM process is used, which is heated or cooled by a heating or cooling medium (34) to lower or increase said thermal gradients.

**Patentansprüche**

1. Verfahren zum Herstellen einer Komponente oder eines Coupons (26), wobei die Komponente oder der Coupon (26) in einer thermischen Maschine unter extremen thermischen und mechanischen Bedingungen verwendet wird, wobei die Komponente oder der Coupon (26) aus einem Superlegierungsmaterial mit einer kontrollierbaren Korngröße (d) hergestellt ist und im Betrieb einer erwarteten Temperatur- und/oder Beanspruchungs- und/oder Verformungsverteilung (T(X,Y,Z); σ(X,Y,Z); ε(X;Y;Z)) unterliegt, die sich mit den geometrischen Koordinaten (X;Y;Z) der Komponente oder des Coupons (26) ändert,
wobei das Verfahren die folgenden Schritte umfasst:

a) Erzeugen von 1D- oder 2D- oder 3D-Parameterverteilungsdaten (24) eines oder mehrerer für die Korngröße relevanter und die Lebensdauer bestimmender Parameter (T, σ, ε usw.) für die Komponente/den Coupon, die bzw. der den Betriebsbedingungen unterliegt, wobei die Verteilungsdaten (24) eine Temperaturverteilung (T(X,Y,Z)) und eine Beanspruchungsverteilung (σ(X,Y,Z)) und/oder eine Verformungsverteilung (ε(X;Y;Z)) umfassen; wobei die Temperatur- und Beanspruchung- und/oder Verformungsverteilungen in Bezug auf die Betriebsbedingungen für die Maximierung der Lebensdauer der Komponente/des Coupons berechnet werden;
b) Ableiten einer optimalen Korngrößenverteilung (d(X;Y;Z)) aus der Temperaturverteilung (T(X,Y,Z)) und der Beanspruchung- und/oder Verformungsverteilung (σ(X,Y,Z); ε(X;Y;Z)), derart, dass die Lebensdauer der Komponente (26) im Vergleich zu einer ähnlichen Komponente mit einer im Wesentlichen gleichmäßigen Korngröße verbessert wird;
c) Herstellen der Komponente/des Coupons (26) durch einen zusätzlichen Herstellungsprozess, insbesondere durch selektives Laserschmelzen (SLM);
d) Kontrollieren während der Herstellung der Komponente/des Coupons (26) der Korngrößenverteilung (d(X;Y;Z)) innerhalb der Komponente/des Coupons (26), um die Lebensdauer der Komponente/des Coupons (26) maximal zu machen, wobei die erwünschte, die Lebensdauer maximal machende Korngrößenverteilung (d(X;Y;Z)) direkt während des zusätzlichen Herstellungsprozesses erzeugt wird.

2. Verfahren nach Anspruch 1, **dadurch gekennzeichnet, dass** die 3D-Parameterverteilungsdaten (24), die eine berechnete 3D-Temperaturverteilung T(X,Y,Z) und eine von-Mises-Beanspruchungsverteilung σ(X,Y,Z) umfassen, durch eine Berechnung, insbesondere durch ein Verfahren finiter Elemente (FEM), erzeugt werden.

3. Verfahren nach Anspruch 1 oder 2, **dadurch gekennzeichnet, dass** das zusätzliche Herstellungsverfahren ein selektives Laserschmelzen (SLM) eines geeigneten Pulvers mit einem ersten Laserstrahl (32) umfasst und dass die Korngröße (d) durch Kontrollieren der Kühlungsrate des Schmelzebeckens im SLM-Prozess kontrolliert wird.

4. Verfahren nach Anspruch 3, **dadurch gekennzeichnet, dass** die Kühlungsrate des Schmelzebeckens im SLM-Prozess durch Kontrollieren der lokalen thermischen Gradienten bei der Schmelzzone kontrolliert werden.

5. Verfahren nach Anspruch 4, **dadurch gekennzeichnet, dass** die lokalen thermischen Gradienten bei der Schmelzzone durch einen zweiten Laserstrahl (32') und/oder durch eine Wärmestrahlungsheizvorrichtung (33) kontrolliert werden.

6. Verfahren nach Anspruch 4 oder 5, **dadurch gekennzeichnet, dass** für den SLM-Prozess eine Substratplatte (28') verwendet wird, die durch ein Erwärmungs- oder Kühlungsmedium (34) erwärmt oder gekühlt wird, um die thermischen Gradienten zu verkleinern bzw. zu vergrößern.

**Revendications**

1. Procédé pour fabriquer un composant ou un coupon (26), lequel composant ou coupon (26) est utilisé dans une machine thermique dans des conditions thermiques et mécaniques extrêmes, moyennant quoi ledit composant ou coupon (26) est réalisé en un matériau en super alliage avec une taille de grain contrôlable (d), et est, en service, soumis à une répartition de température et/ou de tension et/ou de contrainte (T(X, Y, Z) ; σ(X, Y, Z) ; ε(X, Y, Z)) attendue, qui varie avec les coordonnées géométriques (X, Y, Z) du composant ou du coupon (26),
ledit procédé comprenant les étapes

(a) de génération de données de répartition de paramètre 1D ou 2D ou 3D (24) d'un ou de plusieurs paramètres concernant la taille de grain et de détermination de durée de vie (T, σ, ε, etc.) pour ledit composant/coupon dans des conditions de fonctionnement, lesdites données de répartition (24) comprenant une répartition de température (T(X, Y, Z)) et une répartition de tension (σ(X, Y, Z)) ou/et une répartition de contrainte (ε(X, Y, Z)) ; ladite répartition de température et de tension ou/et de contrainte étant calculée en relation avec les conditions de service pour maximiser la durée de vie du composant/coupon ;

(b) de déduction d'une répartition de taille de grain optimale (d(X, Y, Z)) à partir de ladite répartition de température (T(X, Y, Z)) et de tension et/ou de contrainte ($\sigma$(X, Y, Z) ; $\varepsilon$(X, Y, Z)) de sorte que la durée de vie du composant (26) soit améliorée par rapport à un composant similaire avec une taille de grain sensiblement uniforme ;

(c) de fabrication dudit composant/coupon (26) par un processus de fabrication additif, en particulier une fusion par laser sélective (SLM) ;

(d) de commande, pendant la fabrication dudit composant/coupon (26), de la répartition de taille de grain (d(X, Y, Z)) dans ledit composant/coupon (26) afin de maximiser la durée de vie dudit composant/coupon (26), dans lequel la répartition de taille de grain maximisant la durée de vie (d(X, Y, Z)) souhaitée est directement générée pendant ledit processus de fabrication additif.

2. Procédé selon la revendication 1, **caractérisé en ce que** des données de répartition de paramètre 3D (24) comprenant une répartition de température T(X, Y, Z) et une répartition de tension de von Mises $\sigma$(X, Y, Z) 3D calculées sont générées par un calcul, en particulier avec une méthode des éléments finis (FEM).

3. Procédé selon la revendication 1 ou 2, **caractérisé en ce que** ledit procédé de fabrication additif comprend la fusion par laser sélective (SLM) d'une poudre appropriée avec un premier faisceau laser (32), et **en ce que** la taille de grain (d) est contrôlée en commandant la vitesse de refroidissement du bain de fusion dans le processus SLM.

4. Procédé selon la revendication 3, **caractérisé en ce que** la vitesse de refroidissement du bain de fusion dans le processus SLM est commandée en commandant les gradients thermiques locaux au niveau de la zone de fusion.

5. Procédé selon la revendication 4, **caractérisé en ce que** les gradients thermiques locaux au niveau de la zone de fusion sont commandés par un deuxième faisceau laser (32') et/ou un dispositif de chauffage radiant (33).

6. Procédé selon la revendication 4 ou 5, **caractérisé en ce qu'**une plaque de substrat (28') pour le processus SLM est utilisée, laquelle est chauffée ou refroidie par un milieu de chauffage ou de refroidissement (34) pour diminuer ou augmenter lesdits gradients thermiques.

**Fig.1**

**23**

$T(X,Y,Z)$

*Fig.2*

**23a**

**23b  23c**

**23**

$\sigma(X,Y,Z)$

*Fig.3*

**23a**

**23b  23c**

*creep rate*

*B*

*A*

*grain size*

*Fig.4*

EP 2 586 548 B1

**Fig.5**

*Fig.6*

Fig.7

*Fig.8*

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5649280 A
- US 5759305 A
- US 7763129 B2
- US 6215093 B1
- EP 1762122 B2
- DE 10104732 C1

**Non-patent literature cited in the description**

- **LI J. et al.** Microstructure and mechanical properties of rapid directionally solidified Ni-base superalloy Rene'41 by laser melting deposition manufacturing. *Materials Science and Engineering A: Structural Materials: Properties, Microstructure and Processing,* vol. 527 (18), 4823-4829